# EUROPÄISCHE PATENTSCHRIFT

(11) **EP 1 038 816 B1**
(45) Veröffentlichungstag und Bekanntmachung des Hinweises auf die Patenterteilung: **16.06.2004**
(21) Anmeldenummer: 00105186.1
(22) Anmeldetag: 11.03.2000
(51) Int. Cl.: B65H 18/28

(54) **Aufwickelsystem für in Bahnen hergestellte duroplastische Compoundmassen, insbesondere SMC-Platten**
Winding system for duroplastic compound produced in the form of webs, especially SMC plates
Système d'enroulage pour des compositions duroplastiques produites en bande, spécialement des plateaux SMC

(30) Priorität: 23.03.1999 DE 19913032
(43) Veröffentlichungstag der Anmeldung: 27.09.2000
(73) Patentinhaber: Menzolit-Fibron GmbH, 75015 Bretten (DE)
(72) Erfinder: Giraud, Jean-Marc, 41700 Contres (FR)
(74) Vertreter: Scherzberg, Andreas, Dr.

(56) Entgegenhaltungen:
- EP-A- 0 784 227
- WO-A-98/33733
- US-A- 4 568 505
- US-A- 5 601 770

## Beschreibung

Die Erfindung betrifft ein Aufwickelsystem für in Bahnen hergestellte duroplastische Compoundmassen, insbesondere SMC-Platten nach dem Oberbegriff des Anspruchs 1.

SMC (sheet moulding compound) sind bekannte duroplastische Compoundmassen, die in Form von dünnen Platten vorliegen. Das SMC wird mit herkömmlichen Maschinen zwischen zwei Polyäthylen- oder Polyamid-Kunststoffolien zu einer Platte gepreßt und anschließend in eine Verpackung bis zur endgültigen Verarbeitung zwischengelagert.

Als Verpackung eignet sich das Aufwickeln auf eine Spule oder das Einlegen in eine Kiste in der Zickzackfaltung.

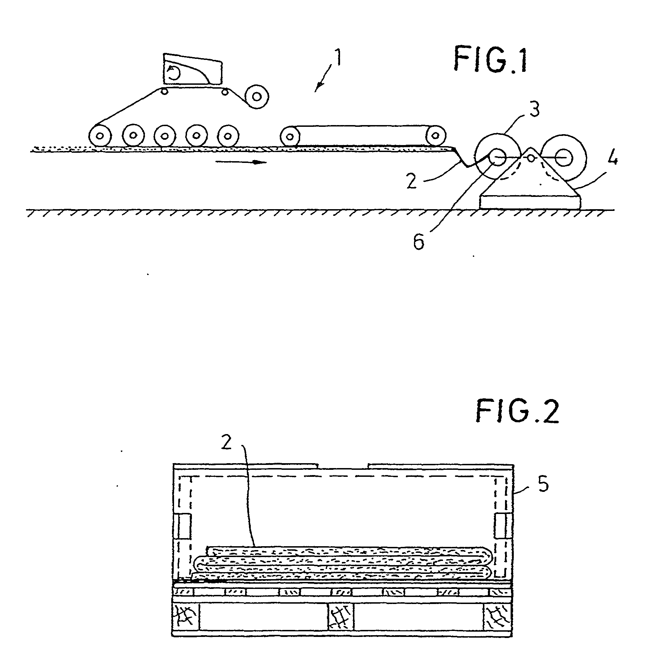

Fig. 1 zeigt das Aufwickeln nach dem Stand der Technik auf eine Spule mit einem Wickelkem mit einem Durchmesser von 250 mm. Verfahren und Vorrichtung zum Aufwickeln werden in US 4 568 505 A und US 5 601 770 A offenbart. Das Gewicht der Einzelverpackung des SMC ist ein grundlegendes Merkmal sowohl für die Produktivität des SMC-Herstellers als auch für die des Formteileherstellers.

Beim SMC-Hersteller ist die Anzahl der Produktionsschritte für eine hergestellte Menge direkt proportional zum Gewicht der einzelnen Rolle.

Beim SMC-Weiterverarbeiter (Formteilehersteller) findet sich diese Proportionalität direkt wieder.

Die aufgewickelte Menge SMC auf eine Rolle beträgt maximal 600 kg. Eine Erhöhung des Rollengewichts würde letztendlich zu einer Verformung der SMC-Rolle führen, wodurch die Qualität des Endprodukts gemindert würde.

Dies sei nachfolgend an einem Beispiel erläutert.

SMC wird normalerweise unter den folgenden Bedingungen auf einer SMC-Maschine hergestellt:
- Geschwindigkeit der SMC-Maschine : 10 Meter/Minute
- Flächenmasse (Gewicht des SMC je m²) : 3,5 kg/m²
- Breite des SMC : 1,5 Meter
- Durchmesser des Wickelkerns : 250 mm

Die pro Minute hergestellte SMC-Menge beträgt 3,5 x 1,5 x 10 = 52,5 kg/Minute.

Unter diesen Bedingungen arbeitet die Maschine 10 Minuten lang ohne Unterbrechung und die aufgewickelte Menge der Rolle beträgt 525 kg. Dies sei Rolle Nr. 1.

Mit den gleichen Parametern arbeitet die SMC-Maschine nun 13 Minuten, so daß eine SMC-Rolle von 682,5 kg erhalten wird. Dies sei Rolle Nr. 2.

Die beiden Rollen werden in einem auf 20 °C klimatisierten Raum aufbewahrt. Nach 48 Stunden wird das Aussehen der beiden Rollen untersucht.

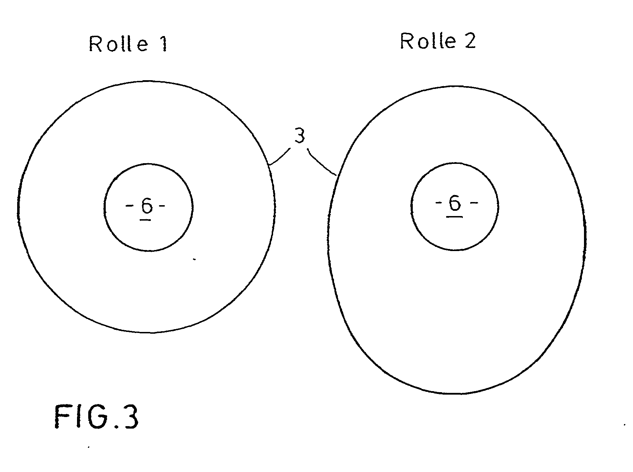

Dabei wird festgestellt, daß Rolle Nr. 1 noch die ursprüngliche zylindrische Form hat, während sich die Rolle Nr. 2 stark verformt hat (siehe Fig. 3).

Die Verformung von Rolle Nr. 2 ist ein Zeichen für die Heterogenität der Flächenmasse (Gewicht pro m²), die unweigerlich bei der weiteren Formgebung des SMC zu Ausschuß führt.

Das maximale Gewicht einer Rolle SMC von 600 kg, das heute am Markt vorgefunden wird, läßt sich dadurch erklären.

Fig. 2 zeigt das Einlegen der SMC-Bahn in eine Kiste in der Zickzackfaltung. Hierdurch läßt sich ein Stückgewicht von 1500 kg erreichen.

Die Qualität des Produkts ist jedoch infolge der Trocknung an der Falzstelle des SMC nicht gewährleistet. Diese Trocknung verstärkt sich noch unter der Wirkung der Materialmasse in der Kiste.

Im übrigen nimmt die Gefahr des Fließens der unteren Schichten des SMC mit dem Gewicht des verpackten Materials zu.

Der Erfindung liegt die Aufgabe zugrunde, ein Aufwickelsystem für in Bahnen hergestellte duroplastische Formmassen, insbesondere SMC-Platten, nach dem Oberbegriff des Anspruchs 1 derart zu verbessern, daß die aufgewickelte Menge stark vergrößert ist, ohne daß eine Verformung der Rolle eintritt.

Erfindungsgemäß wird diese Aufgabe dadurch gelöst, daß der Durchmesser des Wickelkerns mindestens 400 mm beträgt. Vorteilhafterweise liegt der Durchmesser des Wickelkerns zwischen 400 und 600 mm.

Die Vorzüge der Erfindung sind nachfolgend an einem Beispiel erläutert. Es wurde das gleiche SMC verwendet wie in dem weiter oben genannten Beispiel.
- Geschwindigkeit der SMC-Maschine : 10 Meter/Minute
- Flächenmasse (Gewicht des SMC je m2) : 3,5 kg/m²
- Breite des SMC : 1,5 Meter
- Durchmesser des Wickelkems : 550 mm

Die Maschine ist hier 26 Minuten in Betrieb, so daß ein Gewicht von 1365 kg aufgewickelt wird.

Die so hergestellte Rolle wird in einem Raum bei 20 °C aufbewahrt. Nach 48 Stunden wird das Aussehen der Rolle untersucht.

Die 1365-kg-Rolle ist einwandfrei zylindrisch und weist keinerlei Verformungen auf.

Allein durch die Vergrößerung des Durchmessers des Wickelkerns läßt sich ohne Verformung der Rolle eine wesentlich größere SMC-Masse aufwickeln.

Nachfolgend werden die schon zitierten Figuren kurz erläutert.
Fig. 1 zeigt eine herkömmliche Maschine 1 zum Herstellen von SMC-Bahnen bzw. SMC-Platten. Die auf dieser Maschine 1 hergestellte Bahn 2 wird auf eine Spule 3 aufgewickelt. Mit dem Bezugszeichen 4 ist beispielhaft eine Wechselvorrichtung für die Spule 3 gezeigt.
Fig. 2 zeigt eine Kiste 5 in der die SMC-Bahn 2 eingelegt wurde.
Fig. 3 zeigt eine Rolle 1 mit einem Wickelkern 6, die sich nicht verformt hat und ihre zylindrische Form beibehalten hat. Die Rolle 2 in Fig. 3 hat sich verformt, wodurch die Qualität des Endprodukts gemindert ist.

## Patentansprüche

1. Aufwickelsystem für in Bahnen hergestellte duroplastische Compoundmassen, insbesondere SMC-Platten, mit einer aus einem Wickelkern (6) bestehenden Spule (3) auf der die Platte aufgewickelt ist, **dadurch gekennzeichnet, daß** der Durchmesser des Wickelkems (6) mindestens 400 mm beträgt.

2. Aufwickelsystem nach Anspruch 1, **dadurch gekennzeichnet, daß** der Durchmesser des Wickelkerns (6) zwischen 400 und 600 mm liegt.

## Claims

1. Take-up system for thermosetting compound masses, in particular SMC sheets, produced in webs and having a winding core (6) comprising a reel (3) on which the sheet is taken up, **characterized in that** the diameter of the winding core (6) is at least 400 mm.

2. Take-up system according to Claim 1, **characterized in that** the diameter of the winding core (6) is between 400 and 600 mm.

## Revendications

1. Système d'enroulement pour des masses de composite thermodurcissable produites en forme de bandes, en particulier des bandes de SMC, comprenant une bobine (3) constituée par un mandrin d'enroulement (6), sur laquelle la bande est enroulée, **caractérisé par le fait que** le diamètre du mandrin d'enroulement (6) est d'au moins 400 mm.

2. Système d'enroulement suivant la revendication 1, **caractérisé par le fait que** le diamètre du mandrin d'enroulement (6) est compris entre 400 et 600 mm.
